# Europäisches Patentamt

## European Patent Office

### Office européen des brevets

(19)

(11) Veröffentlichungsnummer: **0 128 494**
**B1**

(12) **EUROPÄISCHE PATENTSCHRIFT**

(45) Veröffentlichungstag der Patentschrift:
**26.10.88**

(21) Anmeldenummer: **84106331.6**

(22) Anmeldetag: **02.06.84**

(51) Int. Cl.⁴: **C 03 B 5/42,** C 03 B 3/00,
C 03 B 5/027

(54) **Universal-Glasschmelzofen.**

(30) Priorität: **07.06.83 DE 3320480**

(43) Veröffentlichungstag der Anmeldung:
**19.12.84 Patentblatt 84/51**

(45) Bekanntmachung des Hinweises auf die Patenterteilung:
**26.10.88 Patentblatt 88/43**

(84) Benannte Vertragsstaaten:
**AT BE CH FR GB IT LI LU NL SE**

(56) Entgegenhaltungen:
**EP - A - 0 003 247
GB - A - 1 177 070
US - A - 2 829 784
US - A - 3 877 917
US - A - 3 912 486
US - A - 4 036 625**

**Die Akte enthält technische Angaben, die nach dem
Eingang der Anmeldung eingereicht wurden und die
nicht in dieser Patentschrift enthalten sind.**

(73) Patentinhaber: **Aug. Horn Söhne Inh. Helmut Horn KG,
D-8591 Plössberg/Opf. (DE)**

(72) Erfinder: **Horn, Helmut, Hauptstrasse 29,
D-8591 Plössberg (DE)**
Erfinder: **Bock, Werner, Dipl. Ing., Gösen-Haus nr 7,
D-8485 Floss (DE)**

(74) Vertreter: **Patentanwälte Czowalla . Matschkur +
Partner,
Dr.-Kurt-Schumacher-Strasse 23 Postfach 9109,
D-8500 Nürnberg 11 (DE)**

**Beschreibung**

Die Erfindung bezieht sich auf einen Glasschmelzofen mit einer Elektrowanne mit stehenden, den Wannenboden durchsetzenden Elektroden, sowie einer über die Wanne verfahrbaren Einlegevorrichtung zum Aufbringen des Rohstoffgemenges auf die Oberfläche der Glasschmelze, mit einer maschinell verfahrbaren Abdeckung aus feuerfestem Material für die offene Deckfläche der Wanne, die aus mehreren, sich quer zur Verfahrrichtung der Einlegevorrichtung erstreckenden, zu den Stirnwänden parallelen Abdeckstreifen besteht, die nach oben anhebbar sind, wobei eine der Stirnwände der Wanne mit einer Auslassöffnung versehen ist.

Durch die Abdeckung der Oberfläche eines solchen Glasschmelzofens ergibt sich die Möglichkeit, die Schmelzkapazität den jeweiligen Erfordernissen anzupassen, d.h. durch jeweils mehr oder weniger starke Abdeckung den Ofen nicht immer mit der gleichen Höchstkapazität arbeiten zu lassen. Darüber hinaus ermöglicht diese variable Abdeckung auch die Erzielung eines sauberen Durchschmelzens des aufgebrachten Gemenges. Bei dieser aus der US-Patentschrift 40 36 625 vorbekannten Anordnung ist es allerdings notwendig, eine gesonderte Läuterkammer neben dem Glasschmelzofen vorzusehen, um die Trübungen und Unreinheiten, die durch die Art des Einbringens des Rohstoffgemenges gerade über dem Auslass des Glasschmelzofens erzielt werden, wieder auszugleichen.

Der Erfindung liegt die Aufgabe zugrunde, einen Glasschmelzofen der eingangs beschriebenen Art so auszugestalten, dass er bei einfacherem Aufbau in vielseitiger Weise als Universal-Glasschmelzofen auch zum Erschmelzen von Spezialgläsern eingesetzt werden kann.

Zur Lösung dieser Aufgabe ist erfindungsgemäss vorgesehen, dass die Wanne aus einem oberen rechteckigen Schmelzteil und einem, mit Ausnahme von etwaigen Anfahrelektroden, elektrodenfreien unteren Läuterteil besteht und dass bei teilweiser Abdeckung die freie Einlegeöffnung stets auf der der Stirnwand mit der Auslassöffnung gegenüberliegenden Seite liegt.

Durch die erfindungsgemässe Ausgestaltung lassen sich auch hochwertige Spezialgläser erschmelzen, wobei dies massgeblich darauf beruht, dass in jedem Fall über dem Auslass eine Abdeckung und damit ein sauber durchschmelzender Bereich zur Verfügung steht, in welchem nicht durch neu aufgelegtes Rohstoffgemenge eine ständige Verunreinigung und Trübung der Glasschmelze stattfinden kann. Dadurch ergibt sich im Bereich vor dem Auslass eine ruhigere, sauber durchschmelzende Zone, aus der das Glas völlig rein abgezogen werden kann. Darüber hinaus ergibt sich durch diesen Aufbau auch die Möglichkeit der Anordnung des Läuterteils unmittelbar unter dem Schmelzteil, so dass eine separate Läuterkammer neben der Schmelzkammer, die mit einem erheblich höheren Aufwand verbunden ist, entfallen kann.

In Weiterbildung der Erfindung hat es sich dabei als besonders zweckmässig erwiesen, dass der Querschnitt des quer zu den Elektrodenreihen gegenüber dem Schmelzteil verschmälerten Läuterteils sich trapezförmig nach unten verjüngt.

Gemäss einem weiteren Merkmal der vorliegenden Erfindung sollen die Elektroden Molybdän-Elektroden mit regulierbarer Einragtiefe sein, so dass mehrere Schmelzebenen erreicht werden können.

Zur Regulierung der wirksamen Elektrodenlänge und damit der Höhe der Schmelzebene können in weiterer Ausgestaltung der Erfindung auch die Fusspunkte wenigstens einiger der Elektroden umgebende, auswechselbare Elektrodensteine vorgesehen sein.

Als besonders zweckmässig hat sich eine Elektrodenanordnung in der Praxis erwiesen, bei der der Abstand der Elektroden von der Innenwand der Wanne zwischen 100 mm und 300 mm, vorzugsweise zwischen 150 mm und 250 mm beträgt.

Schliesslich liegt es auch noch im Rahmen der Erfindung, dass die Abdeckstreifen einander übergreifende Stufenränder aufweisen. Durch diese Stufenränder wird das Auftreten von Spalten, durch die einerseits warme Gasströme unter Störung des sich einstellenden Temperaturgleichgewichts nach oben entweichen könnten, und andererseits das Einfallen von Staub auf die Oberfläche der Glasschmelze verhindert.

In weiterer Ausgestaltung der Erfindung kann schliesslich auch noch vorgesehen sein, dass die Abdeckung derart ausgebildet und/oder angeordnet ist, dass zwischen ihr und der Oberfläche der Glasschmelze Spülluft durchgeblasen werden kann, was vorzugsweise dadurch geschehen kann, dass am hinteren Ende eines mit Spülluftöffnungen versehenen oder auf Abstand angeordneten Abdeckstreifens ansetzbare Spülluftdüsen, sowie eine über das jeweils vordere Ende der Abdeckung verfahrbare Absaugvorrichtung vorgesehen sind, die jeweils mit der Abdeckung anhebbar und absenkbar sind. Diese Ausbildung dient in erster Linie zum Absaugen von Entgasungsstoffen aus dem Schmelzprozess, arbeitet aber während der Belegung auch gleichzeitig als Entstaubungsvorrichtung.

Weitere Vorteile, Merkmale und Einzelheiten der Erfindung ergeben sich aus der nachfolgenden Beschreibung eines Ausführungsbeispiels, sowie anhand der Zeichnung. Dabei zeigen:

Fig. 1 eine teilweise geschnittene Seitenansicht eines erfindungsgemässen Glasschmelzofens,

Fig. 2 einen um 90° versetzten Schnitt durch den Glasschmelzofen nach Fig. 2,

Fig. 3 eine Ansicht der Vorrichtung in Fig. 1 in Richtung des Pfeils III,

Fig. 4 eine Teil-Aufsicht in die Elektrowanne,

Fig. 5 eine teilweise geschnittene Seitenansicht der Einlegevorrichtung in Verbindung mit dem Übergreifen der Randstufe eines Abdeckstreifens und

Fig. 6 einen Teilschnitt entsprechend Fig. 1 durch eine abgewandelte Ausführungsform der Erfindung.

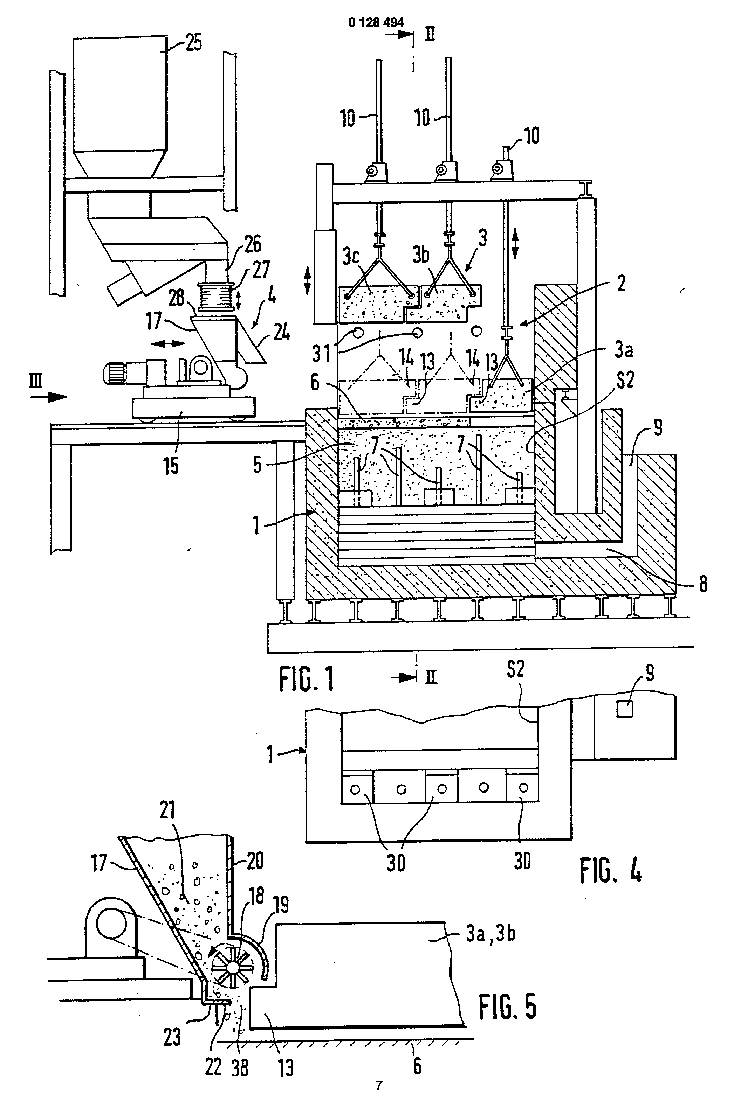

Die Fig. 1 zeigt einen erfindungsgemässen Universal-Glasschmelzofen, mit dem aus Schamott oder ähnlichen Materialien gemauerten, die Elektrowanne 1 umfassenden Unterteil und dem Oberofen 2, in dem eine verfahrbare Abdeckung 3 für die Oberfläche der Glasschmelze angeordnet ist, sowie der über die Wanne 1 verfahrbaren Einlegevorrichtung 4. Die freie Oberfläche der Glasschmelze 5 ist vollständig mit einer Rohstoffschicht 6 (Gemenge und Scherben) abgedeckt, wobei durch die von unten durch den Boden der Wanne 1 einragenden Molybdän-Elektroden 7 kontinuierlich ein Nachschmelzen der Rohstoffabdeckung 6 erfolgt, so dass eine dieser nachschmelzenden Menge entsprechende Menge an Glas über den Durchlass 8 und den Überlauf 9 abgezogen und der Weiterverarbeitung zugeführt wird. Um die jeweilige Produktionsmenge zu regulieren, beispielsweise die Produktion auch vollständig zu unterbrechen und einen Stillstand sozusagen ohne Ablassen oder Abfritten erzielen zu können, ist eine Abdeckung 3 vorgesehen, die im dargestellten Ausführungsbeispiel aus drei Abdeckstreifen 3a, 3b und 3c besteht, deren Länge jeweils die gesamte Breite der Schmelzwanne 1 überbrückt. In der Stellung nach Fig. 1 ist lediglich der Abdeckstreifen 3a mit wenigen Zentimetern Abstand über der Rohstoffschicht 6 heruntergefahren. Infolge dieser Abdeckung 3a schmilzt die Rohstoffschicht 6 unterhalb der Abdeckung vollständig durch. Dies hat zur Folge, dass anschliessend durch das Nachschmelzen nunmehr etwa $^2/_3$ der Glasmenge produziert wird, wie ohne den nach unten gefahrenen Abdeckstreifen 3a. Darüber hinaus ergibt sich unter dem Abdeckstreifen 3a eine Läuterzone für das Glas, was es – die Läuterzone liegt ja unmittelbar vor dem Durchlass 8 – unter anderem auch ermöglicht, Spezialgläser zu schmelzen, die ansonsten mit einem derartigen Ofentyp überhaupt nicht produziert werden könnten.

Das Hochfahren und Absenken der Abdeckstreifen 3a–3c kann durch beliebige Antriebsmittel erfolgen. Lediglich schematisch ist in den Figuren ein Antrieb über Zahnstangen 10 vorgesehen, die über Wellen 11 von Antriebsmotoren 12 her verstellt werden können.

Die Abdeckstreifen sind mit einander übergreifenden Stufenrändern 13, 14 versehen, so dass vertikal durchgehende Spalte zwischen der Schmelze und dem Oberofen 2 vermieden werden. Die Stufenränder 13 haben darüber hinaus noch eine zusätzliche Bedeutung für das Belegen der Oberfläche der Schmelze 5 mit der Rohstoffschicht 6.

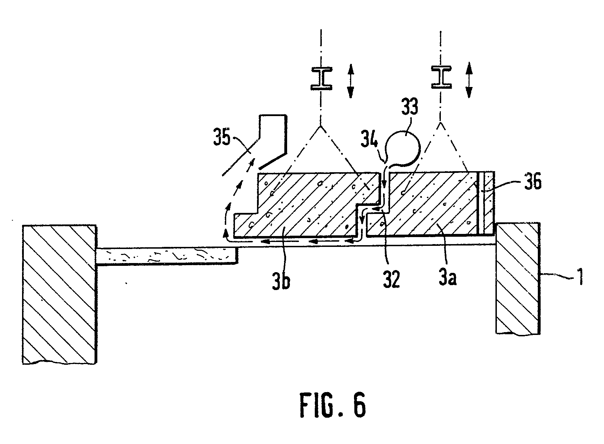

Die Einlegevorrichtung zum Aufbringen der Rohstoffschicht 6 besteht aus einem die gesamte Breite der Wanne 1 überbrückenden Einfahrschlitten 15, der auf Schienen 16 beidseits der Wanne verfahren kann. Auf diesen Einfahrschlitten 15 ist quer verfahrbar ein Vorratstrichter 17 mit einer am unteren Ende über einer Bodenöffnung 38 angeordneten, als Flügelwalze ausgebildeten Dosierwalze 18 gelagert. Die Dosierwalze 18 ist in einer nach vorne gerichteten Auswölbung 19 der Vorderwand 20 des Vorratstrichters so angeordnet, dass sie nur teilweise in den Fallschacht des Vorratstrichters einragt, wobei sie, was man insbesondere aus Fig. 5 erkennen kann, rückwärts dreht. Dadurch erfolgt ein Austragen des Rohstoffgemenges 21 über die Kante 22 der Bodenöffnung 38 in der Weise, dass die Fallhöhe des Gemenges lediglich dem Abstand des Bodens 23 des Vorratstrichters 17 über der Oberfläche der Rohstoffschicht 6 entspricht. Gegenüber herkömmlichen Einlegevorrichtungen mit Hilfe von Förderbändern entspricht dies einer Reduzierung der Fallhöhe um praktisch den Durchmesser der vorderen Umlenkwalze des Förderbandes. Auf diese Art und Weise vermeidet man die Gefahr einer Entmischung des Rohstoffgemenges 21 und eines unerwünschten Eintauchens von Scherben in die Schmelze. In Fig. 1 ist schematisch eine Absaugeinrichtung 24 angedeutet, die den bei der schonenden Aufbringungsart des Rohstoffgemenges 21 der erfindungsgemässen Vorrichtung immer noch entstehenden Staub absaugen soll, ehe er aus dem Oberofen in die Produktionshalle oder gar die Aussenatmosphäre abgegeben werden kann. Diese Absaugvorrichtung 24 kann dabei zusätzlich eine nach unten gerichtete Sprühvorrichtung umfassen, so dass während des Aufbringens des Rohstoffgemenges zusätzlich Wasser auf die Rohstoffschicht 6 aufgesprüht wird, die den Staub binden soll.

Die Fahrbahn mit den Schienen 16 für den Einfahrschlitten 15 der Einlegevorrichtung 4 wird von einem grossen Vorratsbunker 25 überbrückt, dessen Austragsöffnung 26 über einen Verbindungsbalg 27 staubdicht mit der Einfüllöffnung 28 des Vorratstrichters 17 verbindbar ist. Auf diese Art und Weise ist auch beim Nachfüllen des Vorratstrichters 17 jede unerwünschte Staubbildung verhindert.

In Fig. 5 erkennt man, dass die Auswölbung 19, hinter der die Dosierwalze 18 liegt, so ausgebildet ist, dass sie beim Einfahren zum Belegen der Schmelzfläche den Stufenrand 13 des jeweils vordersten Abdeckstreifens übergreift, so dass tatsächlich eine Belegung der freien Oberfläche der Schmelze bis unmittelbar an den Rand des Abdeckstreifens 3a, 3b möglich ist.

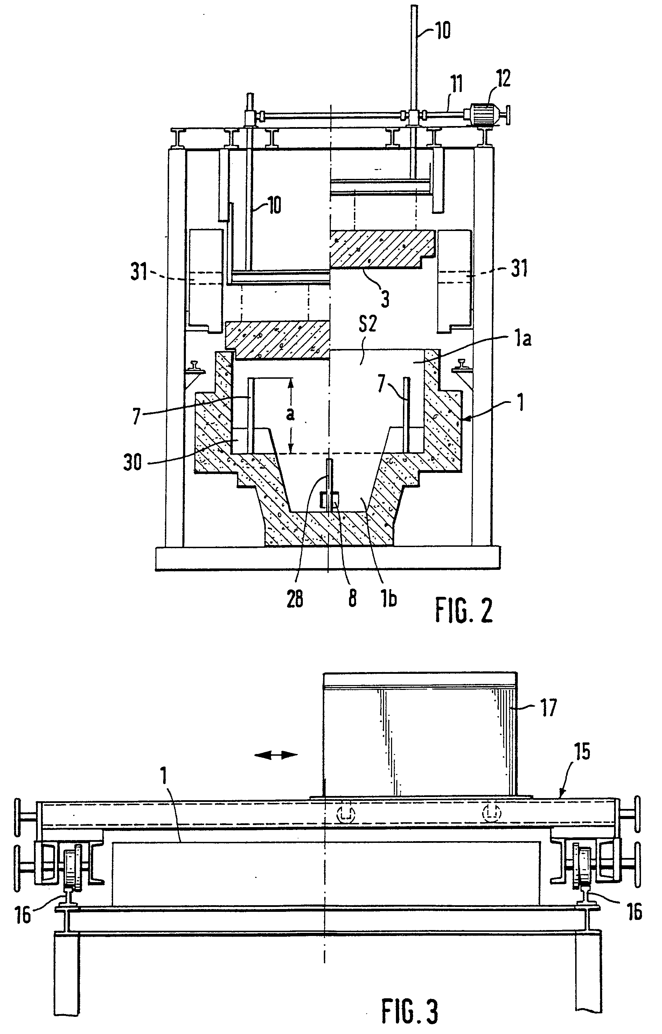

Im gezeigten Ausführungsbeispiel besteht die Elektro-Wanne 1 aus einem rechteckigen oberen Schmelzteil 1a und einem verschmälerten, sich nach unten trapezförmig verjüngenden unbeheizten Läuterteil 1b. Unbeheizt bedeutet in diesem Zusammenhang, dass während der Produktion eine Beheizung des Läuterteils nicht stattfindet. Dennoch sind in diesem Teil ebenfalls Elektroden 28 vorgesehen, die jedoch nur als Anfahrelektroden während des Anfahrens eines solchen Schmelzofens in Funktion treten. Die normalen, vom Boden her in unterschiedliche Höhen durchschiebbaren Molybdän-Elektroden 7 können ausser der Veränderbarkeit ihrer Einragtiefe a, wobei die Einragtiefe der Elektroden untereinander noch unterschiedlich sein kann, mit den Fusspunkt umgebenden Elektrodensteinen 30 versehen sein, wie es jeweils bei jeder zweiten Molybdän-Elektrode 7 in den Fig. 2 und 4 angedeutet ist. Durch diese Elektrodensteine verändert man die wirksame freie, in die Schmelze eintauchende Länge der Molybdän-Elektroden 7 und damit über die veränderte Wärmeproduktion die Schmelzebene der sich ergebenden Glasschmelze. Bei 31 sind Absaugöffnungen angedeutet, die in erster Linie zum Absaugen von Entgasungsstoffen aus dem Schmelzprozess dienen. Diese Absaugöffnungen ermöglichen jedoch während des Einlegens des Rohstoffgemenges auch eine verbesserte Unterdrückung von Staubentwicklung, da während dieser Zeit auch etwa auftretender und nicht von der Absaugvorrichtung 24 der Einlegevorrichtung 4 abgesaugter Staub dann über diese Absaugöffnungen unschädlich aus dem Oberofen entfernt wird.

In Fig. 6 erkennt man einen schematischen Teilschnitt durch einen erfindungsgemässen Glasschmelzofen, bei dem die Abdeckstreifen 3a, 3b und 3c so angeordnet sind, dass Spülluft zwischen der Abdeckung und der Oberfläche der Glasschmelze durchgeblasen werden kann. Zu diesem Zweck sind in dem dargestellten Ausführungsbeispiel die Abdeckstreifen so angeordnet, dass zwischen ihnen ein Spalt 32 besteht, durch den jeweils mit Hilfe einer Spülluftquelle 33, die mit einer Düse 34 versehen ist, Spülluft eingeblasen werden kann, die am vorderen Ende der Abdeckung durch eine Absaugvorrichtung 35 gemeinsam mit den Abdämpfen wieder abgesaugt wird. Die Luftspülung hat dabei nicht nur die Aufgabe Abdämpfe unter der Abdeckung herauszuspülen, sondern soll auch ein Verlegen bzw. Festkleben der einzelnen Abdeckstreifen aneinander verhindern. Selbstverständlich kann die Ausbildung dabei auch so getroffen sein, dass in entsprechender Weise ein Einblasen auch möglich ist, wenn nur der Abdeckstreifen 3a angeordnet ist, wobei es in diesem Fall am einfachsten dadurch erfolgen könnte, dass der Abdeckstreifen 3a mit einer Reihe von Bohrungen oder Schlitzen 36 versehen ist, durch die die Spülluft eingeblasen wird. Die Spülluftquelle 33 und die Absaugvorrichtung 35 sind sowohl mit der Abdeckung in Höhenrichtung verfahrbar, als auch in Einfahrrichtung verstellbar, so dass sie jeweils an der entsprechenden Stelle über der Abdeckung angesetzt werden können.

### Patentansprüche

1. Glasschmelzofen mit einer Elektrowanne (1) mit stehenden, den Wannenboden durchsetzenden Elektroden (7), sowie einer über die Wanne verfahrbaren Einlegevorrichtung (4) zum Aufbringen des Rohstoffgemenges auf die Oberfläche der Glasschmelze (5), mit einer maschinell verfahrbaren Abdeckung (3) aus feuerfestem Material für die offene Deckfläche der Wanne (1), die aus mehreren, sich quer zur Verfahrrichtung der Einlegevorrichtung (4) erstreckenden, zu den Stirnwänden parallelen Abdeckstreifen (3a, 3b, 3c) besteht, die nach oben anhebbar sind, wobei eine der Stirnwände (S2) der Wanne mit einer Auslassöffnung (8) versehen ist, dadurch gekennzeichnet, dass die Wanne aus einem oberen rechteckigen Schmelzteil (1a) und einem, mit Ausnahme von etwaigen Anfahrelektroden, elektrodenfreien unteren Läuterteil (1b) besteht und dass bei teilweiser Abdeckung die freie Einlegeöffnung stets auf der der Stirnwand (S2) mit der Auslassöffnung (8) gegenüberliegenden Seite liegt.

2. Glasschmelzofen nach Anspruch 1, dadurch gekennzeichnet, dass der Querschnitt des quer zu den Elektrodenreihen gegenüber dem Schmelzteil (1a) verschmälerten Läuterteils (1b) sich trapezförmig nach unten verjüngt.

3. Glasschmelzofen nach Anspruch 2, dadurch gekennzeichnet, dass die Elektroden (7) Molybdän-Elektroden mit regulierbarer Einragtiefe sind.

4. Glasschmelzofen nach Anspruch 3, gekennzeichnet durch die Fusspunkte wenigstens einiger der Elektroden (7) umgebende, auswechselbare Elektrodensteine (30) zur Regulierung der wirksamen Elektrodenlänge und damit der Höhe der Schmelzebene.

5. Glasschmelzofen nach Anspruch 3 oder 4, dadurch gekennzeichnet, dass der Abstand der Elektroden (7) von der Innenwand der Wanne (1) zwischen 100 mm und 300 mm, vorzugsweise 150 mm bis 250 mm beträgt.

6. Glasschmelzofen nach einem der Ansprüche 1 bis 5, dadurch gekennzeichnet, dass die Abdeckstreifen (3a, 3b, 3c) einander übergreifende Stufenränder (13, 14) aufweisen.

7. Glasschmelzofen nach einem der Ansprüche 1 bis 6, gekennzeichnet durch eine Ausbildung und/oder Anordnung der Abdeckung (3) derart, dass zwischen ihr und der Oberfläche der Glasschmelze Spülluft durchgeblasen werden kann.

8. Glasschmelzofen nach Anspruch 7, gekennzeichnet durch am hinteren Ende eines mit Spülluftöffnungen (36) versehenen oder auf Abstand (32) angeordneten Abdeckstreifens (3a, 3b, 3c) ansetzbare Spülluftdüsen (34) sowie eine über das jeweils vordere Ende der Abdeckung (3) verfahrbare Absaugvorrichtung (35), die jeweils mit der Abdeckung anhebbar und absenkbar sind.

### Claims

1. A glass melting furnace with an electrode tank (1) comprising standing electrodes (7) passing through the tank bottom, as well as a charging device (4) displaceable over the tank for charging the raw material mixture to the surface of the glass melt (5), with a mechanically movable cover (3) made of fireproof material for the open surface of the tank (1), which cover consists of several cover strips (3a, 3b, 3c) extending transversely to the direction of travel of the charging device (4) and parallel to the front walls and which can be raised in upward direction, wherein one of the front walls (S2) of the tank is provided with an outlet opening (8), characterised in that the tank (1) consists of an upper, rectangular melting zone (1a) and of a lower clarifying zone (1b) which is electrodeless with the exception of optionally present start-up electrodes and that in the case of partial covering the free charging opening is always located on the side opposite to the side of the front wall (S2) with the outlet aperture (8).

2. A glass melting furnace according to Claim 1, characterised in that the cross-section of the clarifying zone (1b) which is narrowed relative to the melting zone (1a) trapezoidally narrows in downward direction.

3. A glass melting furnace according to Claim 2, characterised in that the electrodes (7) are molybdenum electrodes with variable immersion depth.

4. A glass melting furnace according to Claim 3, characterised in comprising interchangeable electrode blocks (30) surrounding the root points of at least some of the electrodes (7) for regulating the effective electrode length and thereby the height of the melting plane.

5. A glass melting furnace according to either Claim 3 or Claim 4, characterised in that the distance between the electrodes (7) and the inner wall of the tank (1) is of between 100 mm and 300 mm, preferably 150 mm to 250 mm.

6. A glass melting furnace according to any one of Claims 1 to 5, characterised in that the cover strips (3a, 3b, 3c) have mutually overlapping stepped edges (13, 14).

7. A glass melting furnace according to any one of Claims 1 to 6, characterised in that it comprises a construction and/or arrangement of the cover (3) in such a manner, that scavenging air can be can be blown through between said cover and the glass melt.

8. A glass melting furnace according to Claim 7, characterised in that it comprises scavenging air nozzles (34) which can be mounted on the rear end of cover strips (3a, 3b, 3c) provided with scavenging air orifices (36) or spaced (32) relative to each other, as well as an exhaust device (35) movable over the front end of the cover (3), which device can be raised and lowered with the cover.

**Revendications**

1. Four pour fusion du verre comprenant une cuve électrique (1) avec des électrodes verticales (7) traversant le fond de la cuve ainsi qu'un dispositif d'introduction (4) mobile au-dessus de la cuve pour le chargement du mélange de matière première à la surface du bain de verre (5), un recouvrement (3) en matériau réfractaire pour la surface ouverte de la cuve (1) déplaçable par des moyens mécaniques, qui se compose de plusieurs bandes de recouvrement (3a, 3b, 3c) susceptibles d'être soulevées vers le haut, qui sont parallèles aux parois frontales et s'étendent transversalement au sens de déplacement du dispositif d'introduction (4), une des parois frontales (S2) de la cuve étant munie d'une ouverture de sortie (8), caractérisé en ce que la cuve se compose d'une partie supérieure rectangulaire (1a) pour la fusion et d'une partie d'affinage inférieure (1b) sans électrodes, à l'exception des électrodes de démarrage éventuelles et en ce que l'ouverture d'introduction libre se trouve toujours du côté opposé à la paroi frontale (S2) avec l'ouverture de sortie (8) lorsque le recouvrement est partiellement en place.

2. Four pour fusion du verre selon la revendication 1, caractérisé en ce que la section de la partie d'affinage (1b) transversale aux rangées d'électrodes plus étroite par rapport à la partie du bain (1a) se rétrécit vers le bas en forme de trapèze.

3. Four pour fusion du verre selon la revendication 2, caractérisé en ce que les électrodes (7) sont des électrodes en moybdène dont la profondeur de pénétration est réglable.

4. Four pour fusion du verre selon la revendication 3, caractérisé en ce que des socles interchangeables (30) entourent les pieds de quelques unes au moins des électrodes (7) pour régler la profondeur utile des électrodes et par conséquent, la hauteur du niveau du bain.

5. Four pour fusion du verre selon les revendications 3 ou 4, caractérisé en ce que la distance des électrodes (7) de la paroi intérieure de la cuve (1) se situe entre 100 et 300 mm, de préférence entre 150 mm et 250 mm.

6. Four pour fusion du verre selon l'une des revendications 1 à 5, caractérisé en ce que les bandes de recouvrement (3a, 3b, 3c) comportent des bords étagés (13, 14) se chevauchant.

7. Four pour fusion du verre selon l'une des revendications 1 à 6, caractérisé en ce que le recouvrement (3) est conçu et/ou disposé de manière à pouvoir souffler de l'air de balayage entre ce dernier et la surface du bain de verre.

8. Four pour fusion du verre selon la revendication 7, caractérisé par des tuyères d'air (34) susceptibles d'être fixées à l'extrémité d'une bande de recouvrement (3a, 3b, 3c) munie d'ouvertures (36) pour l'air de balayage ou montée écartée (32) ainsi que par un dispositif d'aspiration (35) déplaçable au-dessus de l'extrémité avant respective du recouvrement (3) et pouvant être soulevé et abaissé avec le recouvrement.

FIG. 1

FIG. 4

FIG. 5

FIG. 2

FIG. 3

FIG. 6